Europäisches Patentamt

European Patent Office

Office européen des brevets

(19)

(11) Veröffentlichungsnummer : **0 077 498**
**B1**

(12) **EUROPÄISCHE PATENTSCHRIFT**

(45) Veröffentlichungstag der Patentschrift :
21.01.87

(51) Int. Cl.⁴ : **H 02 K 44/06**

(21) Anmeldenummer : **82109291.3**

(22) Anmeldetag : **07.10.82**

(54) Induktionstauchpumpe, insbesondere für Aluminium.

(30) Priorität : **21.10.81 DE 3141774**

(43) Veröffentlichungstag der Anmeldung :
**27.04.83 Patentblatt 83/17**

(45) Bekanntmachung des Hinweises auf die Patenterteilung : **21.01.87 Patentblatt 87/04**

(84) Benannte Vertragsstaaten :
**AT BE CH DE FR GB IT LI LU NL SE**

(56) Entgegenhaltungen :
**EP-A- 0 021 219**
**FR-A- 1 593 007**
**FR-A- 2 396 449**
**SU-A- 268 174**
**US-A- 2 811 923**

(73) Patentinhaber : **INTERATOM Gesellschaft mit bes-**
**chränkter Haftung**
**Friedrich-Ebert-Strasse**
**D-5060 Bergisch Gladbach 1 (DE)**

(72) Erfinder : **Hans, Rainer, Dipl.-Ing.**
**An der Wolfsmaar 6**
**D-5060 Bergisch-Gladbach (DE)**

(74) Vertreter : **Mehl, Ernst, Dipl.-Ing. et al**
**Postfach 22 01 76**
**D-8000 München 22 (DE)**

EP 0 077 498 B1

**Beschreibung**

Die vorliegende Erfindung betrifft eine Induktionstauchpumpe für heiße, flüssige Metalle, insbesondere für Aluminium, nach dem Oberbegriff des Anspruchs. Solche Pumpen sind aus der FR-PS-1 593 007 im Prinzip bekannt. Allerdings eignet sich der prinzipielle Aufbau dieser Pumpen nicht problemlos zur Förderung beispielsweise von flüssigem Aluminium. Da es keine aluminiumbeständigen Metallegierungen gibt, muß Aluminium in keramischen Bauteilen geführt werden, für welche die Form der beschriebenen Pumpen zu kompliziert ist.

Aus der EP-A-0 021 219 ist jedoch eine Pumpe mit einem einfacheren Aufbau des Förderkanals, nämlich einem rechteckigen Förderkanal, bekannt. Solche rechteckigen Förderkanäle lassen sich aus keramischem Material leichter herstellen als Ringkanäle. Dafür haben jedoch Pumpen dieser Ausgestaltung eine erheblich höhere Verlustleistung bei gleicher Förderleistung als Ringkanalpumpen.

Um aus einem Behälter flüssiges Metall kontinuierlich oder portionsweise zu entnehmen, werden derzeit hauptsächlich zwei Methoden angewendet. Eine Möglichkeit ist das Abschöpfen über den Rand des Behälters, wobei aber manuelle Arbeit oder aufwendige Mechanik nötig sind. Die zweite Möglichkeit ist das kontrollierte Ablassen durch eine Öffnung am Boden des Schmelzenbehälters. Die Kontrolle wird dabei durch einen Schieber oder auch eine elektromagnetische Pumpenanordnung erreicht. Beim Versagen der Verschlußeinrichtung besteht allerdings das Risiko des Leerlaufens des Behälters, weshalb man bei größeren Behältern auf Öffnungen unterhalb des Flüssigkeitsspiegels verzichten will. Eine Tauchpumpe verbindet die Vorteile beider Methoden. Sie taucht von oben in die Schmelze ein und fördert das flüssige Metall kontinuierlich oder portionsweise über den Rand des Behälters. Beim Versagen — z. B. durch Stromausfall — wird lediglich die Förderung unterbrochen. Eine elektromagnetische Tauchpumpe kann fernbedient werden und ermöglicht eine genaue Portionierung. Bei den früheren Versuchen, Induktionspumpen für beispielsweise flüssiges Aluminium als Tauchpumpen auszuführen, konnten bisher keine befriedigenden Ergebnisse erzielt werden. Die Gründe dafür sind folgende :

a) Ringkanalpumpen, wie in der FR-PS-1 593 007 beschrieben, lassen sich nicht einfach aus keramischen Materialien herstellen.

b) Wegen der bei Tauchpumpen für heiße Fluide naturgemäß an den Spulen auftretenden hohen Temperaturen mußten die Wicklungen aus einem temperaturbeständigen Material hergestellt werden, was wegen der schlechten Leitfähigkeit solcher Materialien zu großen Verlustleistungen führte. Bei Verwendung von rechteckigen Förderkanälen mit ihren ohnehin großen Verlustleistungen konnten so keine funktionsfähigen Pumpen hergestellt werden. Bei Verwendung von Kupfer als Spulenmaterial ergab sich zwar eine geringere Verlustleistung, jedoch oxidierten die Spulen bei dieser Temperatur und wurden nach kurzer Zeit unbrauchbar.

c) Die magnetischen Eigenschaften des Spulenkerns konnten je nach Betriebszustand nicht aufrechterhalten werden, da die Curie-Temperatur in der Nähe des Förderkanals überschritten wurde.

d) Beim Fördern von Aluminium konnte kein blasenfreier Aluminiumstrahl erreicht werden, was für einen sinnvollen Einsatz von Tauchpumpen wünschenswert wäre.

Aus der russischen Patentschrift 268 174 ist ferner eine Tauchpumpe bekannt, bei welcher vom Pumpkanal ein abgewinkeltes Rohr schräg nach unten über den Behälterrand des Schmelzenbehälters führt. Bei einer solchen Anordnung ist ein blasenfreies Fördern von Flüssigmetall wegen der sich am höchsten Punkt ansammelnden Blasen schwierig. Außerdem tropft bei einem Förderstopp Flüssigmetall aus dem schräg nach unten führenden Rohr nach.

Aufgabe der vorliegenden Erfindung ist es, eine Tauchpumpe, insbesondere für flüssiges Aluminium herzustellen, welche die genannten Nachteile nicht aufweist und bei langer Lebensdauer eine kontinuierliche oder genau portionierende Förderung ermöglicht.

Zur Lösung dieser Aufgabe wird eine Pumpe gemäß dem Hauptanspruch vorgeschlagen. Die Verwendung eines rechteckigen Förderkanals bei einer Tauchpumpe führt bei gleichzeitiger Verwendung von Kupferspulen nicht zu einer untragbaren Vergrößerung der Verlustleistung. Allergings muß eine Möglichkeit zur Kühlung und Inertisierung des Gehäuseinneren vorgesehen werden, um die Oxidation der Kupferspulen auf ein Minimum zu reduzieren. Zur Inertisierung und Kühlung kann vorzugsweise Stickstoff verwendet werden. Schon diese Maßnahmen bewirken durch konstante Betriebsbedingungen und hohe Leistung eine weitgehend blasenfreie Förderung des Flüssigmetalls, welche jedoch folgendermaßen noch verbessert werden kann : Da das geförderte Flüssigmetall über den Rand des Schmelzenbehälters geführt werden muß, ist das obere Ende des Pumpenkanals abgewinkelt, wobei ein Rohr von geringerer Querschnittsfläche als der des Pumpenkanals zur Seite und etwas nach oben führt. Ein Winkelübergangsstück bewirkt einen kontinuierlichen Übergang vom rechteckigen Strömungskanal zum Winkel dazu liegenden Rohr von geringem Querschnitt. Diese Maßnahme, insbesondere die Querschnittverringerung, bewirkt, daß der Druck am Anfang des Rohres und in dem Übergangsstück relativ groß ist, so daß eine kontinuierliche Förderung ohne Blasen bewirkt wird.

Die Funktionsweise von Induktionspumpen und die Schaltungsmöglichkeiten für die Spulen sind in der Literatur bereits eingehend beschrieben und dem Fachmann bekannt. Einige grundlegende Gedanken dazu können aus der Zeitschrift « Neue Hütte » — 21. Jahrgang — Heft 10 vom Oktober 1976 — Seiten 580 bis 584 und der dort angegebenen Literatur entnommen werden.

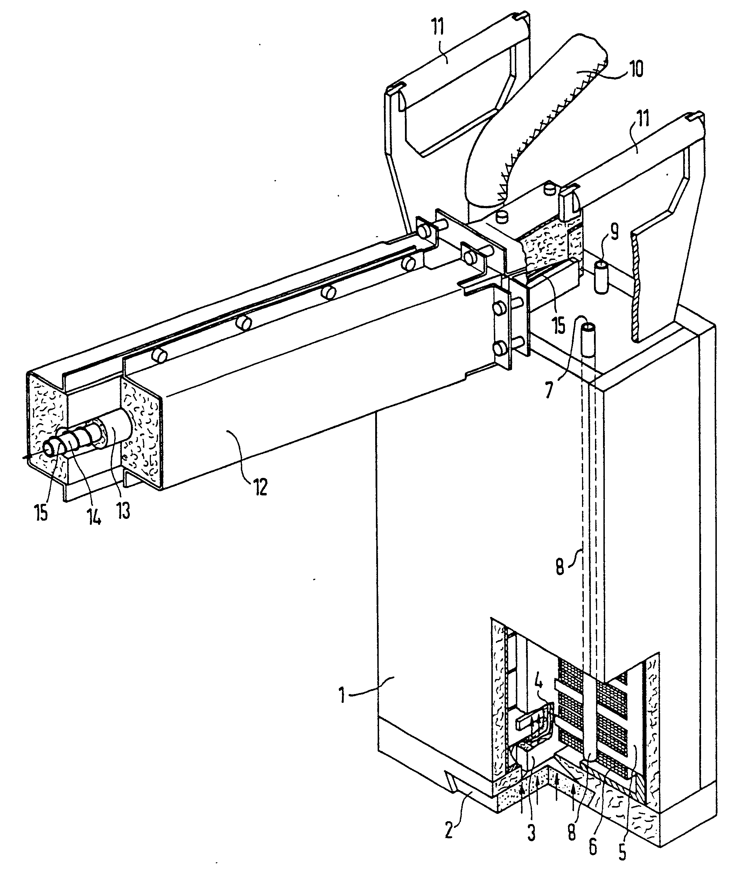

Eine erfindungsgemäße Tauchpumpe ist — teilweise geschnitten — in der Zeichnung dargestellt. In einem Gehäuse 1, welches gegen hohe Temperaturen unempfindlich und für Sauerstoff möglichst undurchlässig ist, befindet sich eine an sich bekannte Induktionspumpenanordnung, bestehend aus einem Pumpenkanal 3 mit rechteckigem Querschnitt 4 und außen an seinen Breitseiten liegenden Induktionsspulen 6, welche auf einen kammförmigen Spulenkern 5 mit zum Rechteckkanal gerichteten Zähnen gewickelt sind. Der Förderkanal besteht vorzugsweise aus Graphit und ist an der Unterseite des Gehäusebodens durch eine für das flüssige Aluminium durchlässige Keramikplatte 2 abgedeckt. Das Gehäuse 1 der Pumpenanordnung ist so gekapselt, daß weder flüssiges Aluminium noch Luftsauerstoff in größerem Maße eindringen kann. Um die dennoch ins Innere des Gehäuses dringenden Sauerstoffanteile auszuspülen, befindet sich an der Oberseite des Gehäuses eine Einlaßöffnung 7, durch welche über ein Verteilerrohr 8 ein Inertgas, beispielsweise Stickstoff, nach unten in das Pumpengehäuse geleitet werden kann. Durch einen Auslaßstutzen 9 tritt das Inertgas wieder aus. Durch geeignete Führung des Verteilerrohres und entsprechende Plazierung kann das Inertgas auch zur Kühlung der Spulen und der Spulenkerne dienen. Die Zuleitungen der Spulen werden durch einen Schutzschlauch 10 ins Innere des Gehäuses geführt. Mit Hilfe von Griffen 11 kann die gesamte Pumpe aus der Schmelze herausgehoben werden. Am oberen Ende des Gehäuses wird der rechteckige Pumpkanal mit Hilfe eines Formstückes um nicht ganz 90° abgeknickt und in ein rundes Rohrstück 14 übergeführt. Dabei ist die Querschnittsfläche des Rohres 14 geringer als die Querschnittsfläche des Pumpkanals. Das Rohr 14 ist von Isoliermaterial 12, 13 umgeben und führt über den Rand des Aluminiumschmelzenbehälters hinweg und wird durch eine Heizwicklung 15 beheizt.

## Patentanspruch

Induktionstauchpumpe, insbesondere für flüssiges Aluminium, mit einem in die Flüssigkeit tauchenden Kanal (3), wobei die Tauchpumpe oberhalb und unterhalb des Flüssigkeitsspiegels durch ein temperaturbeständiges Gehäuse (1) gekapselt ist und oberhalb des Flüssigkeitsspiegels eine oder mehrere Zu- (7) und Ableitungen (9) zur Ventilation mit einem Kühlgas aufweist, gekennzeichnet durch folgende Merkmale :

a) der Kanal (3) weist einen rechteckigen Querschnitt (4) auf, wobei an seinen Breitseiten Außeninduktionsspulen (6) auf einem kammförmigen Spulenkern (5) mit zum Kanal (3) gerichteten Zähnen angeordnet sind ;

b) die Induktionsspulen (6) sind aus Kupfer ;

c) am oberen Ende (15) des Kanals (3) ist um nicht ganz 90° abgewinkelt ein etwas nach oben führendes Rohr (14) von geringerer Querschnittsfläche als der des Kanals (3) mit einem Winkelübergangsstück befestigt, das einen kontinuierlichen Übergang zwischen Kanal (3) und Rohr (14) bewirkt ;

d) das Kühlgas ist ein Inertgas.

## Claim

A submersible induction pump, in particular for liquid aluminium, comprising a channel (3) which extends into the liquid, where the submersible pump is encased by a housing (1) of temperature stability above and below the liquid level, and has one or more supply lines (7) and discharge lines (9) for ventilation with a cooling gas above the liquid level, characterised by the following features :

a) the channel (3) has a rectangular cross-section (4), where on its broad sides outer induction coils (6) are arranged on a comb-like coil core (5) with teeth which are directed towards the channel (3) ;

b) the induction coils (6) are made of copper ;

c) a slightly upwardly inclined pipe (14) which is not quite angled at 90° to, and has a smaller cross-sectional surface than, the channel of an angular transition piece which effects a continuous transition between the channel (3) and the pipe (4) ;

d) the cooling gas is an inert gas.

## Revendication

Pompe immergée à induction, notamment pour de l'aluminium liquide, comportant un conduit (3) immergé dans le liquide, la pompe immergée étant encapsulée, au-dessus et au-dessous du niveau du liquide, dans un carter (1) résistant à la température et comportant, au-dessus du niveau du liquide, une ou plusieurs canalisations d'admission (7) et une ou plusieurs canalisations d'évacuation (9) utilisées pour la ventilation avec un gaz de refroidissement, caractérisée par les moyens suivants :

a) le conduit (3) possède une section transversale rectangulaire (4), des bobines extérieures d'induction (6) étant disposées, sur les côtés larges du conduit, sur un noyau en forme de peigne (5) comportant des dents dirigées vers le conduit (3) ;

b) les bobines d'induction (6) sont réalisées en cuivre ;

c) un tube (14), qui s'étend sur une faible distance vers le haut et possède une surface en coupe transversale inférieure à celle du conduit (3), est fixé, selon une disposition coudée non complètement à 90°, sur l'extrémité supérieure (15) du conduit (3), au moyen d'un organe de jonction coudé, qui réalise une jonction continue entre le conduit (3) et le tube (14) ; et

d) le gaz de refroidissement est un gaz inerte.